# FASCICULE DE BREVET EUROPEEN

(11) **EP 2 878 551 B1**
(45) Date de publication et mention de la délivrance du brevet: **14.03.2018**
(21) Numéro de dépôt: 14193044.6
(22) Date de dépôt: 13.11.2014
(51) Int. Cl.: B65D 88/12, B60J 7/08

(54) **Dispositif de bâchage/débâchage latéral d'un caisson de chargement de type benne, vehicle et caisson de chargement pourvu de ce dispositif**
Vorrichtung zum seitlichen Abdecken/Aufdecken eines Containers, Fahrzeug und Container damit
Device for lateral tarping/detarping of a bin, vehicle and bin therewith

(30) Priorité: 29.11.2013 FR 1361848
(43) Date de publication de la demande: 03.06.2015
(73) Titulaire: BENALU, 62800 Lievin (FR)
(72) Inventeur: Gressier, Christophe, 59251 Allennes les Marais (FR); Dernoncourt, Cédric, 62880 Vendin Le Vieil (FR)
(74) Mandataire: Matkowska, Franck

(56) Documents cités:
- EP-A1- 0 429 356
- EP-A2- 2 377 707
- DE-A1-102006 005 161
- DE-U1-202008 015 088
- US-A- 3 667 802
- US-A- 4 518 193

## Description

### Domaine technique

La présente invention concerne le domaine du bâchage/débâchage latéral d'un caisson de chargement avec ouverture de chargement supérieure, et notamment d'une benne de transport.

### Art antérieur

Il est usuel d'utiliser un caisson de chargement, de type benne, qui est apte à être chargé par le dessus, pour le stockage et/ou transport de tout type de produit. Ce type de caisson comporte une paroi de fond surmontée par deux parois latérales opposées, et par deux parois avant et arrière reliant chacune les deux parois latérales opposées. Ces parois délimitent un volume de chargement et une ouverture supérieure pour le chargement par le dessus du caisson.

Pour son transport, le caisson peut être monté, de manière amovible ou non amovible, sur tout type de véhicule de transport, et notamment sur le châssis porteur d'un véhicule roulant industriel, de type camion-porteur, remorque ou semi-remorque, ou sur un wagon ferroviaire.

Ce type de caisson peut être chargé avec tout type de produit, et plus particulièrement, mais non exclusivement avec des produits en vrac ou semi-vrac. Plus particulièrement, lorsque le caisson est destiné à être chargé avec des produits en vrac ou semi-vrac, tel que par exemple, et de manière non exhaustive, des matières agricoles en vrac (céréales, betteraves, pommes de terre, ...), des matériaux de terrassement ou déchets en vrac (terre, sable, gravas...), le caisson est de préférence une benne basculante, qui peut être basculée vers le haut et vers l'arrière, par exemple au moyen de vérins hydrauliques, de manière à permettre son déchargement par écoulement par gravité du produit en vrac ou semi vrac. Lorsque le caisson est une benne basculante, sa paroi arrière comporte ou forme une porte arrière à un ou plusieurs vantaux, pour faciliter le déchargement en laissant passer le produit en vrac ou semi vrac.

Afin de protéger le contenu du caisson lors de son stockage et/ou transport, il est usuel d'équiper le caisson avec une bâche de couverture souple et amovible permettant de fermer de manière étanche l'ouverture supérieure de chargement du caisson.

Plus la taille de l'ouverture de chargement est importante, et plus la taille de la bâche est importante et rend les opérations de bâchage/débâchage difficiles.

Il existe dans l'art antérieur différents dispositifs, qui permettent de faciliter les opérations de bâchage/débâchage, en permettant un enroulement et déroulement manuels, semi-automatisés, ou automatisés d'une bâche sur un caisson de chargement.

Plus particulièrement, dans une variante de réalisation connue, décrite par exemple dans les brevets américains US 5765901, US 4 302 043 et US 4 915 439, dans le modèle d'utilité allemand DE 20 2008015088 et dans la demande de brevet français FR 2 848 934, le dispositif de bâchage/débâchage comporte une bâche attachée à l'une des deux parois latérales du caisson dite première paroi latérale, et une barre d'enroulement/déroulement, qui est attachée à la bâche. La barre d'enroulement/déroulement est supportée à ses deux extrémités par le caisson et peut rouler sur le caisson, dans un sens ou dans l'autre, entre ladite première paroi et l'autre paroi latérale opposée, respectivement entre une première position dans laquelle la bâche est enroulée autour de la barre d'enroulement/déroulement, et une deuxième position dans laquelle la bâche est déroulée et couvre l'ouverture supérieure du caisson. Le dispositif de bâchage/débâchage comporte en outre un moyen d'entraînement, qui peut être manuel de type manivelle, ou motorisé, de type moteur ou motoréducteur, et qui est couplé mécaniquement à une extrémité de la barre d'enroulement/déroulement et permet de faire tourner la barre d'enroulement/déroulement sur elle-même dans un sens de rotation ou dans l'autre pour enrouler ou dérouler la bâche.

Lors du déroulement de la bâche de ce type de dispositif, il arrive fréquemment que l'arbre d'enroulement/déroulement ne conserve pas son alignement par rapport au caisson et se mette en crabe, ce qui provoque un dysfonctionnement préjudiciable du dispositif, et oblige à une intervention manuelle lourde et fastidieuse pour dérouler correctement la bâche et réaligner l'arbre d'enroulement/déroulement par rapport au caisson. Ce problème est d'autant plus critique dans le cas d'un bâchage/débâchage de type latéral, car la longueur des parois latérales d'un caisson est généralement importante, ce qui aboutit à mettre en oeuvre un arbre d'enroulement/déroulement de longueur importante.

Pour résoudre ce problème, dans les brevets américains US 4 991 901, US 5 002 328, et US 6 513 856, et dans le modèle d'utilité allemand DE 20 2008015088, il est proposé d'ajouter au moins un câble ou une sangle de rappel ou un sandow, qui ont pour fonction d'empêcher que l'arbre d'enroulement/déroulement ne se mette en crabe par rapport au caisson au cours des phases de déroulement de la bâche. A cet effet, une première extrémité de ce câble ou de cette sangle de rappel ou de ce sandow est fixée à la seconde paroi latérale susvisée du caisson, et l'autre extrémité de ce câble ou de cette sangle de rappel ou de ce sandow est fixée à l'arbre d'enroulement/déroulement, de telle sorte que le câble ou la sangle ou le sandow s'enroule autour de l'arbre d'enroulement/déroulement au cours de chaque opération de déroulement de bâche, et se déroule de l'arbre d'enroulement/déroulement au cours de chaque opération d'enroulement de bâche.

Pour que cette solution soit fiable et permette effectivement d'empêcher que l'arbre d'enroulement/déroulement ne se mette en crabe par rapport au caisson au cours des phases de déroulement de la bâche, il est en pratique fortement recommandé de mettre en oeuvre un câble ou une sangle ou un sandow à chaque extrémité de l'arbre d'enroulement/déroulement.

Cette solution de câbles ou sangles de rappel ou sandows présente toutefois l'inconvénient majeur de laisser des câbles, des sangles ou des sandows tendus, en travers du caisson, entre lesdites première et deuxième parois latérales, lorsque le caisson est débâché. Or ces câbles, sangles ou sandows tendus peuvent de manière préjudiciable entraver le déchargement du caisson en particulier lorsque le caisson comporte ou forme une porte arrière et le déchargement du caisson se fait par l'arrière, et notamment lorsque le caisson est une benne basculante. En outre, la présence de ces câbles ou sangles tendus en travers du caisson lorsque celui-ci est débâché est également une source d'accidents pour les engins de chargement du caisson, par exemple de type chargeuses sur pneus, qui risquent de s'accrocher dans ces câbles, sangles ou sandows tendus.

### Objectif de l'invention

La présente invention vise à proposer une nouvelle solution de bâchage/débâchage latéral d'un caisson avec ouverture de chargement supérieure, pouvant être déchargé par l'arrière et mettant en oeuvre un arbre d'enroulement/déroulement d'une bâche qui est apte à rouler sur le caisson lors des opérations de déroulement et d'enroulement de la bâche. Cette nouvelle solution permet d'éviter la présence d'obstacle en travers du caisson, tels que par exemple les câbles, sangles ou sandows de rappel des solutions de l'art antérieur, qui pourrait entraver le déchargement par l'arrière du caisson, et permet d'empêcher de manière simple et fiable que l'arbre d'enroulement/déroulement ne se mette en crabe par rapport au caisson, en particulier au cours des phases de déroulement de la bâche.

### Résumé de l'invention

L'invention a ainsi pour premier objet un caisson de chargement, de type benne, équipé d'un dispositif de bâchage/débâchage, tels que définis dans la revendication 1. L'invention a également pour objet un dispositif de bâchage/débâchage pour caisson de chargement, tel que défini dans la revendication 14.

L'invention a enfin pour objet un véhicule, notamment un véhicule industriel roulant de type camion-porteur, remorque ou semi-remorque, embarquant un caisson amovible ou non amovible, et un dispositif de bâchage/débâchage susvisés.

Dans l'invention, la transformation de la rotation de la barre d'enroulement/déroulement en un mouvement de translation et un mouvement de rotation à chacune des deux extrémités de la barre d'enroulement/déroulement, au cours des opérations de déroulement et d'enroulement de la bâche, grâce aux organes d'entraînement qui sont en en prise (engrènement) avec les rails d'entrainement, permet avantageusement de maintenir l'alignement de la barre d'enroulement/déroulement par rapport au caisson.

La position escamotée d'au moins un des rails d'entraînement permet avantageusement à ce rail d'entraînement de ne pas faire obstacle aux opérations de déchargement du caisson.

De manière facultative selon l'invention, le caisson de chargement et/ou le dispositif de bâchage/débâchage peuvent comporter les caractéristiques techniques optionnelles ci-après, prises isolément ou en combinaison :
- Les deux rails d'entraînement et les deux organes d'entraînement permettent la transformation de la rotation de la barre d'enroulement/déroulement en une combinaison d'un mouvement de rotation et d'un mouvement de translation circulaire de la barre d'enroulement/déroulement.
- Chaque organe d'entraînement est une roue dentée, et chaque rail d'entraînement comprend une crémaillère apte à engrener avec la roue dentée correspondante.
- Chaque organe d'entraînement est un pignon, et chaque rail d'entraînement comprend une chaîne fixe apte à engrener avec le pignon correspondant.
- La porte arrière comporte un unique vantail monté pivotant autour d'un axe sensiblement vertical, et l'un des rails d'entraînement est porté par ledit vantail de manière à permettre son escamotage.
- La porte arrière comporte deux vantaux qui sont chacun montés pivotant autour d'un axe sensiblement vertical et l'un des rails d'entraînement comporte deux portions de rail d'entraînement portées respectivement par les deux vantaux arrière, de telle sorte qu'une fois la porte arrière à deux vantaux fermée, les deux portions de rail d'entraînement sont dans le prolongement l'une de l'autre et forment un rail d'entraînement, qui s'étend entre les deux parois latérales du caisson, et de telle sorte que l'ouverture de chaque vantail arrière permet l'escamotage de chaque portion de rail d'entraînement.
- Le caisson comporte une traverse arrière sur laquelle est fixé l'un des rails d'entrainement, et qui est mobile de manière à permettre l'escamotage dudit rail d'entrainement.
- La traverse arrière est montée pivotante.
- Le caisson est équipé de moyens de levage permettant de faire basculer vers le haut et vers l'arrière le caisson.
- Le moyen d'entraînement de la barre d'enroulement/déroulement comporte un moteur ou motoréducteur embarqué dont le rotor est couplé à l'arbre d'enroulement/déroulement.
- Le dispositif de bâchage/débâchage comporte des moyens de reprise de couple, qui ont pour fonction de bloquer en rotation le stator du moteur ou motoréducteur par rapport au caisson.
- Les moyens de reprise de couple sont conçus pour appliquer sur la barre d'enroulement/déroulement une force permettant de maintenir constamment en prise les deux organes d'entraînement avec les rails d'entrainement au cours du déplacement de la barre d'enroulement/déroulement.
- Le caisson de chargement et/ou le dispositif de bâchage/débâchage est dépourvu de moyen de rappel de l'arbre d'enroulement/déroulement, tel qu'un câble de rappel ou une sangle de rappel ou un sandow de rappel, fixé à l'arbre d'enroulement/déroulement.

### Brève description des figures

D'autres caractéristiques et avantages de l'invention apparaîtront plus clairement à la lecture de la description détaillée ci-après de plusieurs variantes préférées de réalisation de l'invention, laquelle description détaillée est donnée à titre d'exemple non limitatif et non exhaustif de l'invention, et en référence aux dessins annexés sur lesquels :
- La figure 1 est une vue d'ensemble d'un caisson de chargement basculant comportant une porte arrière à deux vantaux, et équipé d'un dispositif de bâchage/débâchage de l'invention, la bâche étant complètement enroulée sur l'arbre d'enroulement/déroulement du dispositif de bâchage/débâchage.
- La figure 2 représente le caisson de chargement et le dispositif de bâchage/débâchage de la figure 1, vus de l'arrière du caisson.
- La figure 3 est une vue d'ensemble du caisson de chargement et du dispositif de bâchage/débâchage de la figure 1, les deux vantaux arrière du caisson étant ouverts.
- La figure 4 est une vue de détail des deux vantaux arrière du caisson de la figure 1, les deux vantaux arrière étant en position fermée.
- La figure 5 est une vue d'ensemble du caisson de chargement et du dispositif de bâchage/débâchage, en cours d'opération de bâchage ou de débâchage du caisson, la bâche étant partiellement déroulée de l'arbre d'enroulement/déroulement et couvrant partiellement l'ouverture de chargement du caisson.
- La figure 6 est une vue d'ensemble du caisson de chargement et du dispositif de bâchage/débâchage, une fois le caisson complètement bâché, la bâche étant complètement déroulée de l'arbre d'enroulement/déroulement et couvrant totalement l'ouverture de chargement du caisson.
- La figure 7 est une vue de détail d'une première variante de réalisation (non couverte par l'invention) du dispositif de bâchage/débâchage avec roues de friction en guise d'organes d'entraînement et pistes rugueuses en guise de rails d'entraînement, cette figure montrant l'une des deux roues de friction en contact avec friction avec l'une des deux pistes rugueuses.
- La figure 8 est une vue de détail d'une deuxième variante de réalisation du dispositif de bâchage/débâchage avec deux roues dentées en guise d'organes d'entraînement et deux crémaillères en guise de rails d'entraînement, cette figure montrant l'une des deux roues dentée engrenant respectivement avec l'une des deux crémaillères.
- La figure 9 est une vue de détail d'une troisième variante de réalisation du dispositif de bâchage/débâchage avec deux pignons en guise d'organes d'entraînement et deux chaînes en guise de rails d'entraînement, cette figure montrant l'un des deux pignons engrenant respectivement avec l'une des deux chaînes.
- La figure 10 est une vue d'ensemble d'une autre variante de réalisation d'un caisson de chargement et du dispositif de bâchage/débâchage, dans laquelle le caisson comporte une traverse arrière pivotante pour l'escamotage du rail d'entraînement arrière (notamment piste rugueuse, crémaillère ou chaîne) du dispositif de bâchage/débâchage.
- La figure 11 est une vue de face des moyens de guidage par rapport au caisson de la barre d'enroulement/déroulement du dispositif de bâchage/débâchage.
- La figure 12 est une vue de côté des moyens de guidage de la figure 11.
- La figure 13 est une vue d'ensemble d'une autre variante de réalisation d'un caisson de chargement et du dispositif de bâchage/débâchage, dans laquelle la paroi arrière du caisson forme une porte arrière à vantail unique.

### Description détaillée

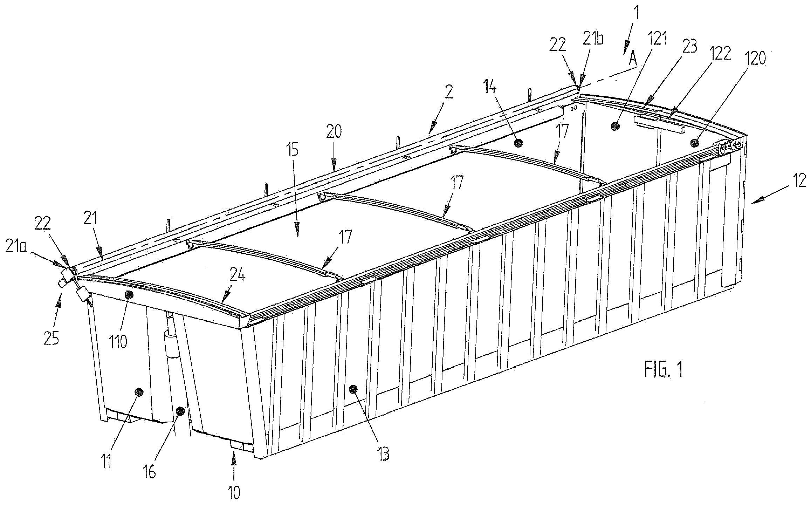

On a représenté sur la figure 1 une benne basculante comportant un caisson 1 de forme sensiblement parallélépipédique, ouvert en partie supérieure, et équipé d'un dispositif de bâchage/débâchage 2 conforme à l'invention et comportant une bâche souple 20. Dans le cadre de l'invention, le caisson 1 n'est pas nécessairement de forme sensiblement parallélépipédique, mais peut avoir une toute autre forme.

Ce caisson 1 peut être utilisé pour le transport et/ou le stockage de tout type de produit, et en particulier de produits en vrac ou semi-vrac.

Le caisson 1 comprend une paroi de fond 10 surmontée par deux parois latérales opposées 13, 14 et de grande longueur, correspondant à la longueur du caisson, et par deux parois opposées avant 11 et arrière 12 de plus faible longueur, reliant les deux parois latérales 13, 14, et correspondant à la largeur du caisson 1. Les parois 10, 11,12, 13 et 14 délimitent un volume de chargement V. Les bords supérieurs des parois 11, 12, 13 et 14 délimitent une ouverture de chargement 15 permettant un remplissage par le dessus du volume de chargement V du caisson 1. Dans cette variante, le caisson 1 est également équipé de manière connue d'arceaux 17 qui permettent de soutenir la bâche, et qui sont escamotables par pivotement.

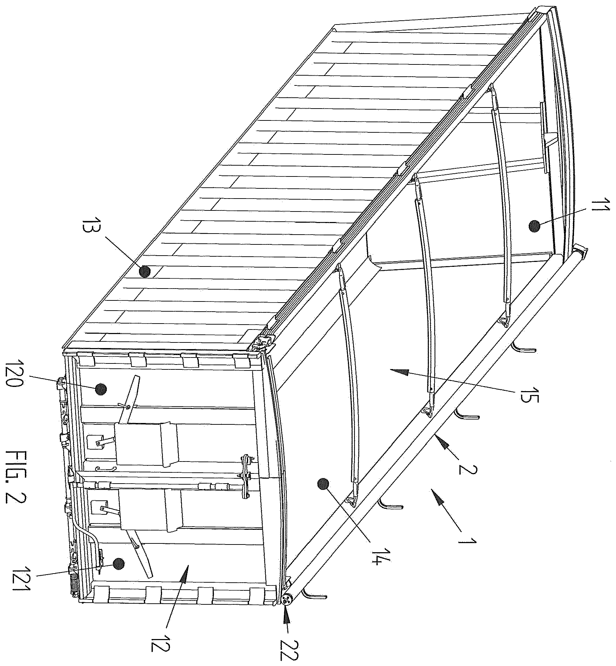

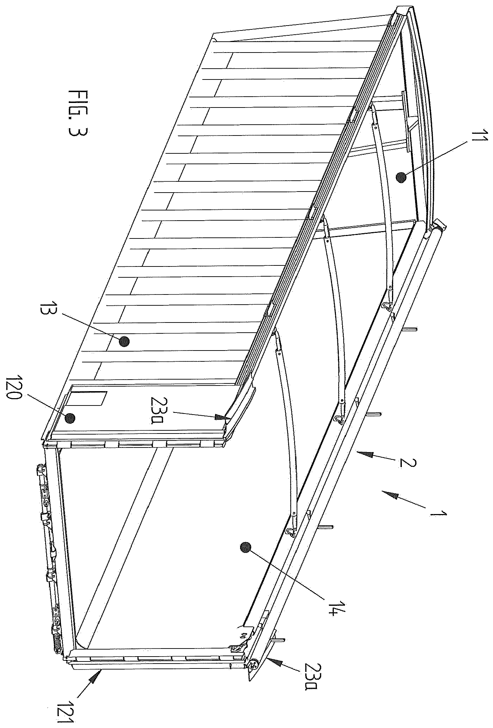

Dans l'exemple particulier illustré des figures 1 à 3, la paroi arrière 12 constitue une porte arrière formée de deux vantaux 120, 121 qui peuvent pivoter verticalement vers l'extérieur du caisson 1 (figure 3), de manière à ouvrir complètement l'arrière du caisson lors des opérations de déchargement.

Dans l'exemple particulier illustré sur la figure 1, s'agissant d'une benne basculante, le caisson 1 est équipé en partie avant de moyens de levage 16, de type vérin hydraulique, qui permettent de lever le caisson 1, par rapport à une surface d'appui, vers le haut et vers l'arrière lors des opérations de déchargement du caisson, de manière à permettre le déplacement par gravité vers l'arrière du caisson 1 des produits contenus dans le volume de chargement V. Lorsque le caisson est monté de manière amovible ou non amovible sur un véhicule de transport, de type par exemple camion-porteur, remorque ou semi-remorque, la surface d'appui du vérin 16 est formée par le châssis du véhicule. Les moyens de levage ne sont pas nécessairement en partie avant du caisson, mais peuvent par exemple dans une autre variante être positionnés sous le caisson 1.

L'invention n'est toutefois pas limitée à une benne basculante, le caisson 1 pouvant dans le cadre de l'invention être dépourvu de moyens de levage 16.

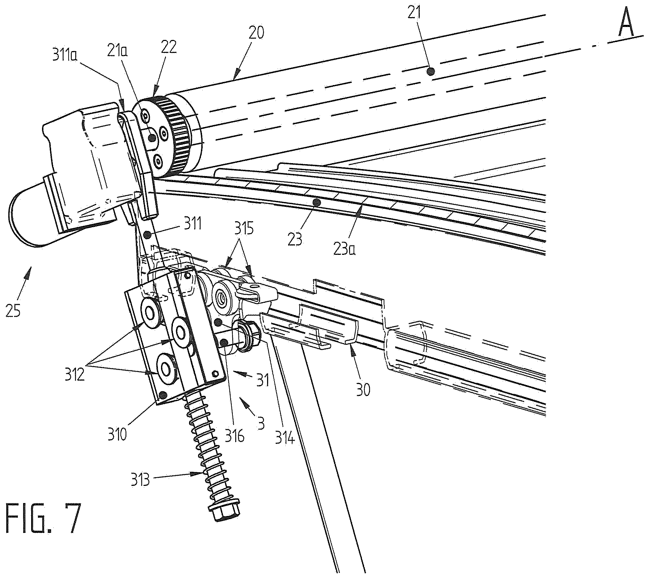

La bâche 20 du dispositif de bâchage/débâchage 2 est attachée à la paroi latérale 14 du caisson 1, et le dispositif de bâchage/débâchage 2 comporte une barre d'enroulement/déroulement 21 (figure 7) qui est attachée à la bâche 20. La barre d'enroulement/déroulement 21 est alignée par rapport au caisson 1, son axe longitudinal A étant parallèle à l'axe longitudinal avant/arrière du caisson 1.

Le dispositif de bâchage/débâchage 2 comporte également un moteur ou motoréducteur 25, qui est embarqué sur la barre d'enroulement/déroulement 21, et dont le rotor est couplé mécaniquement à l'extrémité avant 21a de la barre d'enroulement/déroulement 21, et permet de faire tourner la barre d'enroulement/déroulement 21 sur elle-même dans un sens de rotation ou dans l'autre pour enrouler ou dérouler la bâche 20.

La barre d'enroulement/déroulement 21 comporte un organe d'entraînement 22 à chacune de ses deux extrémités avant 21a et arrière 21b non couvertes par la bâche 20.

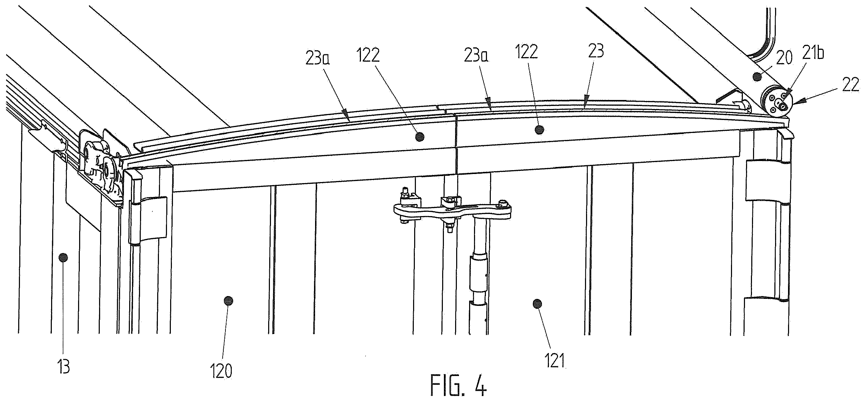

En référence à la figure 4, chaque vantail arrière 120, 121 est équipé d'une demi-casquette 122 qui est fixée sur le bord supérieur de la porte. Sur la face supérieure de chaque demi-casquette 122 est fixée une portion 23a de rail d'entraînement. Lorsque les deux vantaux arrière 120 et 121 sont fermés (figure 4), les deux portions de rail 23a sont dans le prolongement l'une de l'autre et forment un rail d'entraînement arrière 23, qui s'étend transversalement entre les deux parois latérales 13 et 14, et qui est escamotable par ouverture des vantaux 120, 121.

A l'opposé, la paroi avant 11 est équipée d'une casquette 110 qui est fixée sur le bord supérieur de la paroi avant 11, et qui s'étend transversalement entre les deux parois latérales 13 et 14 du caisson 1. Sur la face supérieure de cette casquette 110 est fixé un rail d'entraînement avant 24, non escamotable, qui s'étend transversalement entre les deux parois latérales 13 et 14.

L'organe d'entrainement 22 fixé à l'avant 21a de la barre d'enroulement/déroulement 21 est positionné par rapport à la paroi avant 11 du caisson 1, de manière à coopérer avec le rail d'entraînement avant 24. A l'opposé, l'organe d'entrainement 22 fixé à l'arrière 21b de la barre d'enroulement/déroulement 21 est positionné par rapport à la paroi arrière 12 du caisson de manière à coopérer avec le rail d'entraînement arrière 23, lorsque les deux vantaux arrière 120 et 121 sont fermés.

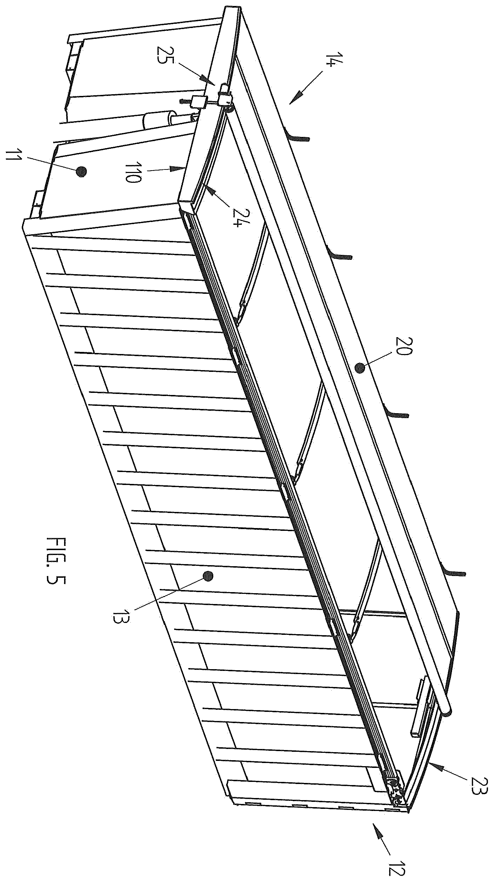

Dans la variante particulière des figures 1 à 7, chaque organe d'entraînement 22 est une roue de friction fixée à l'extrémité correspondante de la barre d'enroulement/déroulement 21 et coaxiale avec la barre d'enroulement/déroulement 21, et les rails d'entraînement 23, 24 forment deux pistes ou bandes à surface rugueuse en contact avec friction respectivement avec les deux roues de friction 22.

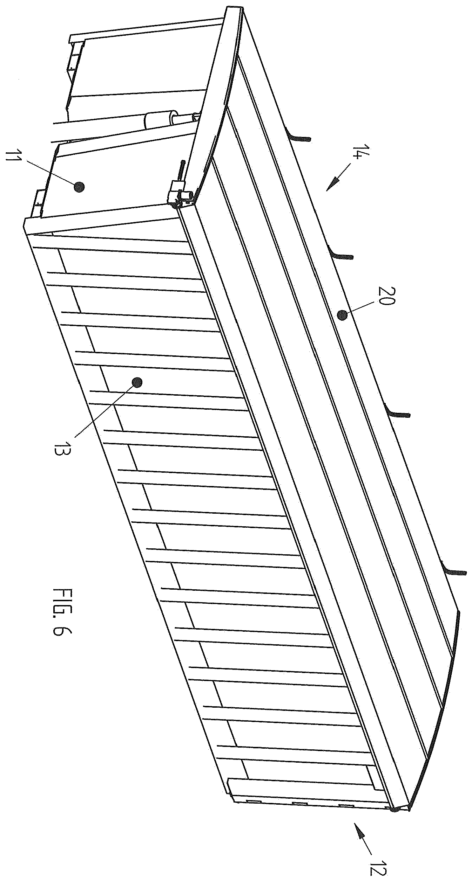

Lorsque le caisson 1 est débâché (figure 1), la bâche 20 est complètement enroulée autour de l'arbre d'enroulement/déroulement 21. Pour bâcher le caisson 1, un opérateur commande depuis le sol le moteur ou motoréducteur 25, de manière à faire pivoter sur elle-même la barre 21 dans le sens de déroulement de la bâche, jusqu'à ce que la barre 21 atteigne la paroi latérale opposée 13 (figure 6). A l'inverse, pour débâcher le caisson 1, l'opérateur commande depuis le sol le moteur ou motoréducteur 25, de manière à faire pivoter sur elle-même la barre 21 dans le sens opposé d'enroulement de la bâche, jusqu'à ce que la barre 21 atteigne la paroi latérale opposée 14 (figure 1).

Grâce aux deux roues de friction 22 en contact avec friction avec les deux pistes rugueuses 23 et 24, lors des opérations de bâchage ou débâchage, la rotation de la barre d'enroulement/déroulement 21 est transformée (par friction dans cet exemple particulier) en un mouvement de rotation et en un mouvement de translation, à chacune des deux extrémités avant 21a et arrière 21b de la barre d'enroulement/déroulement 21. Au cours de son déplacement, la barre d'enroulement/déroulement 21 reste avantageusement alignée avec le caisson 1 et ne se met pas en crabe, les deux extrémités avant 21a et arrière 21b de la barre 21 roulant sur la caquette avant 110 et sur les demi-casquettes arrière 122 du caisson 1 à la même vitesse. Ceci est particulièrement avantageux lors des opérations de bâchage, au cours desquelles la bâche 20 est déroulée de la barre 21, et n'exerce pas de tension mécanique sur la barre 21.

Dans l'exemple particulier illustré sur les figures, mais de manière non limitative de l'invention, le mouvement de translation de la barre d'enroulement/déroulement est une translation circulaire. Dans le cadre de l'invention, ce mouvement de translation de la barre d'enroulement/déroulement 21 peut ne pas être circulaire, mais peut par exemple être une translation rectiligne ou tout autre type de translation.

En référence à la figure 3, lorsque le caisson 1 est débâché, avant de procéder au déchargement du caisson 1, on ouvre les deux vantaux arrière 120 et 121, ce qui permet également d'escamoter les deux portions 23a de la piste rugueuse arrière 23 dans une position escamotée, dans laquelle elle ne s'étend pas entre les deux parois latérales 13 et 14, et n'entrave pas, lors des opérations de déchargement, le passage des produits par l'arrière du caisson 1 et/ou le mouvement d'un engin de chargement, par exemple une chargeuse sur pneus.

Pour reformer la piste rugueuse arrière 23, avant des opérations de chargement par le dessus et de bâchage du caisson 1, il suffit de fermer les deux vantaux arrière 120 et 121, tel qu'illustré sur les figures 1, 2 et 4.

L'invention s'étend plus généralement à la mise en oeuvre, aux deux extrémités de la barre d'enroulement/déroulement 21, de deux organes d'entraînement aptes à engrener respectivement avec deux rails d'entraînement portés par le caisson, de manière à permettre, au cours des opérations de déroulement et d'enroulement de la bâche 20, la transformation de la rotation de la barre d'enroulement/déroulement 21 en une combinaison d'un mouvement de rotation et d'un mouvement de translation à chacune des deux extrémités 21a, 21b de la barre d'enroulement/déroulement 21, et de manière à éviter un désalignement (mise en crabe) de l'arbre d'enroulement/déroulement 21 par rapport au caisson 1.

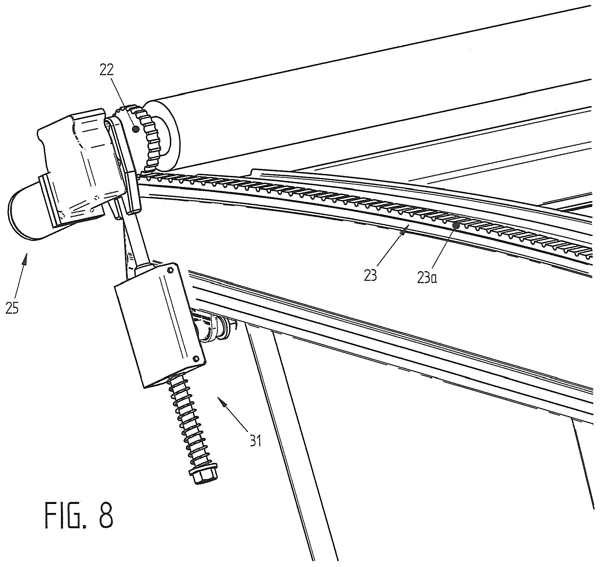

Dans une variante de réalisation de l'invention illustrée sur la figure 8, chaque organe d'entraînement 22 à l'extrémité de la barre d'enroulement/déroulement 21 est une roue dentée, et chaque rail d'entrainement 23,24 est une crémaillère apte à engrener avec la roue dentée 22.

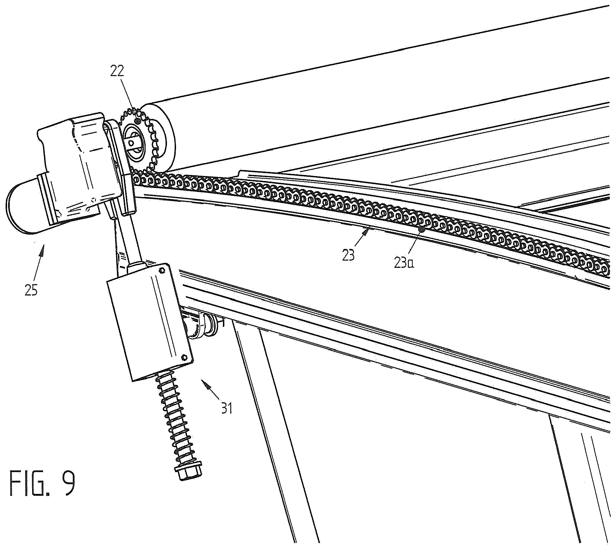

Dans une autre variante de réalisation de l'invention illustrée sur la figure 9, chaque organe d'entraînement 22 à l'extrémité de la barre d'enroulement/déroulement 21 est un pignon, et chaque rail d'entrainement 23, 24 est une chaîne fixe apte à engrener avec le pignon denté.

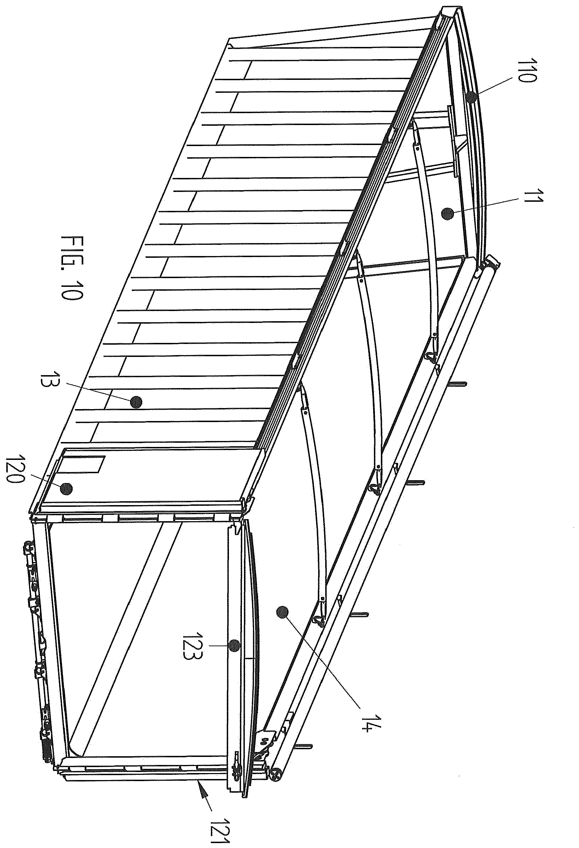

Dans une autre variante de réalisation de l'invention illustrée sur la figure 10, le rail d'entraînement arrière 23 escamotable est d'un seul tenant et n'est pas porté par les deux vantaux arrière 120 et 121, mais est porté par une traverse supérieure 123, qui est montée pivotante autour d'un axe vertical sur la paroi latérale 13, de manière à pouvoir déplacer le rail d'entraînement arrière 23 entre la position de bâchage/débâchage dans laquelle il s'étend entre les deux parois latérales 13, 14 du caisson 1, et la position escamotée dans laquelle il ne s'étend pas entre les deux parois latérales 13, 14 du caisson 1, et est positionné à l'extérieur du caisson 1 de manière à ne pas entraver les opérations de déchargement du caisson 1.

Lorsque le rail d'entraînement arrière 23 escamotable n'est pas porté par la porte arrière du caisson, la porte arrière peut dans ce cas également être une porte oscillante montée pivotante autour d'un axe horizontal.

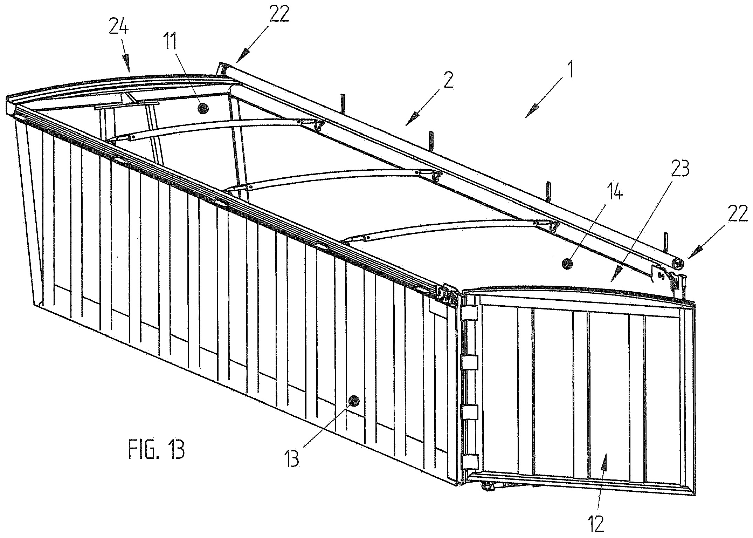

Dans une autre variante de réalisation l'invention illustrée sur la figure 13, le caisson 1 peut comporter une paroi arrière 12 qui constitue une porte arrière de grande taille constituée d'un unique vantail, monté pivotant autour d'un axe sensiblement vertical par rapport à l'une des deux parois latérales 13 ou 14. Dans ce cas, le rail d'entrainement arrière 23 peut être d'un seul tenant et fixé sur le bord supérieur de ladite porte arrière. L'ouverture de cette porte arrière à vantail unique permet l'escamotage de ce rail d'entraînement arrière 23.

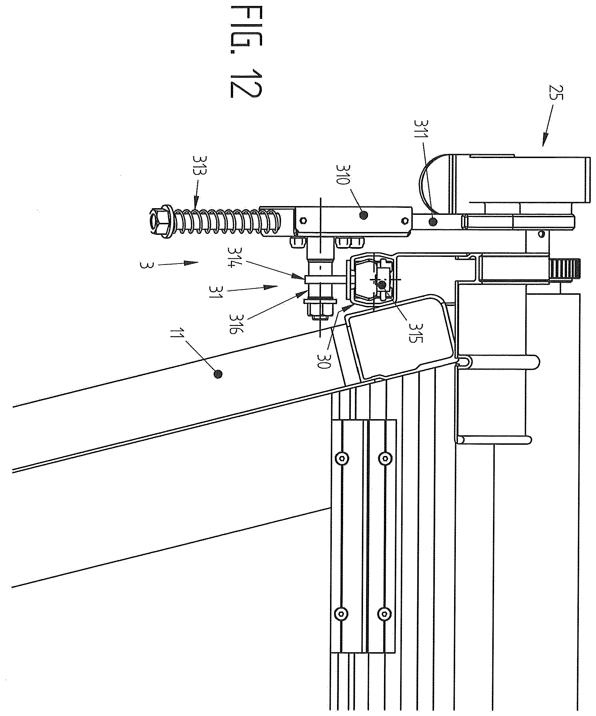

En référence à la variante de réalisation de la figure 7 et des figures 11 et 12, la barre d'enroulement/déroulement 21 est équipée de moyens de reprise de couple 3, qui ont pour première fonction de bloquer en rotation le stator du moteur ou motoréducteur 25 embarqué par rapport au caisson, en formant un point fixe pour ce stator par rapport au caisson de manière à permettre une reprise de couple et éviter que le stator du moteur ou motoréducteur 25 ne tourne autour de la barre d'enroulement /déroulement 21.

Ces moyens de reprise de couple 3 ont également pour deuxième fonction d'appliquer sur la barre d'enroulement/déroulement 21 une force la maintenant au plus près du caisson au cours de son déplacement, ce qui permet de maintenir les organes d'entrainement 22 en prise avec les rails d'entrainement 23, 24 lors des opérations de bâchage et de débâchage.

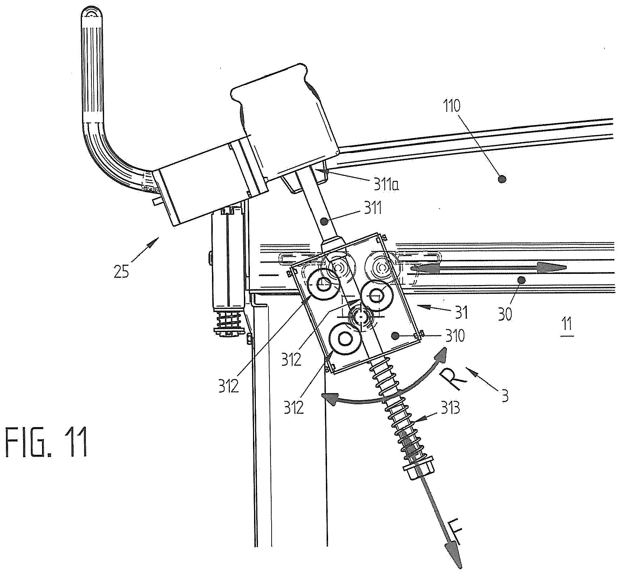

Plus particulièrement, dans l'exemple illustré, ces moyens de reprise de couple 3 comportent un rail de guidage 30 fixé sur la face externe de la paroi avant 11, et un mécanisme de guidage 31 monté à l'extrémité avant 21a de la barre 21. Ce mécanisme de guidage 31 comporte un boîtier 310, une tige de rappel 311 qui traverse le boîtier 310, et qui est mobile verticalement en translation dans les deux sens (figure 11/double flèche F) par rapport au boîtier 310, en étant guidée par des galets de guidage 312 montés à l'intérieur du boîtier 310. Cette tige de rappel 311 est également précontrainte en étant constamment rappelée élastiquement en position en direction du boîtier 310, par un moyen de rappel élastique 313, tel qu'un ressort. Sur le boîtier 310 est en outre fixé un chariot de guidage 314, par l'intermédiaire d'un axe de liaison 316 horizontal permettant un pivotement dans un sens ou dans l'autre du boîtier 310 par rapport au chariot de guidage 314 (figure 11/ double flèche R). Sur le chariot de guidage 314 sont montés des galets de guidage 315 positionnés dans le rail de guidage 30. L'extrémité libre supérieure 311a de la tige de rappel 311 est fixée au stator du motoréducteur 25, de telle sorte que le stator du motoréducteur 25 est bloqué en rotation par rapport au caisson.

Au cours du déplacement de l'arbre d'enroulement/déroulement 21 entre les deux parois latérales 13, 14 du caisson 1, les galets de guidage 315, en coopération avec le rail de guidage 30, permettent de guider le mouvement de translation de la barre d'enroulement/déroulement. Au cours du déplacement de la barre d'enroulement/déroulement 21, la tige de rappel 311 compense les variations de positionnement en hauteur de la barre d'enroulement découlant de son mouvement de translation sur le caisson, qui dans cet exemple est un mouvement de translation circulaire, et exerce sur la barre d'enroulement/déroulement 21 une force de rappel la maintenant au plus près du caisson 1. En référence à la figure 11, le déplacement en translation dans un sens ou dans l'autre (double flèche F) de la tige de rappel 311 et la rotation dans un sens ou dans l'autre (double flèche R) de l'ensemble tige de rappel 311/boîtier 310, par rapport au rail de guidage linéaire 30, permet à la barre d'enroulement/déroulement de suivre un trajet courbe (translation circulaire) au contact de rails d'entrainement 23, 24 courbes, lors des opérations de bâchage et de débâchage.

Dans une autre variante de réalisation, les moyens de reprise de couple 3 pourraient avoir une toute autre structure et par exemple pourraient être identiques aux moyens de reprise de couple avec bras de rappel pivotant et ressort de torsion décrits dans la demande de brevet français FR 2 848 934 et illustrés sur la figure1 de cette publication.

Dans les variantes de l'invention illustrées sur les figures annexées, les rails d'entrainement sont des crémaillères ou des chaînes, et les organes d'entraînement aux extrémités de la barre 21 sont des roues dentées ou des pignons. Cette liste n'est pas exhaustive, les crémaillères ou les chaînes d'une part, et les roues dentées ou des pignons d'autre part, pouvant plus généralement être remplacés par tout moyen équivalent remplissant la même fonction d'entraînement par engrènement.

L'invention n'est pas limitée à la mise en oeuvre d'un moteur ou motoréducteur embarqué pour la mise en rotation de la barre d'enroulement/déroulement 21. Le moteur ou motoréducteur embarqué peut également être remplacé par un système d'actionnement manuel de type manivelle.

## Revendications

1. Caisson (1) de chargement, de type benne, comportant une paroi avant (11), une paroi arrière (12) et deux parois latérales opposées (13, 14), qui délimitent une ouverture supérieure (15) pour son chargement, la paroi arrière (12) du caisson (1) comportant ou formant une porte arrière permettant le déchargement par l'arrière du caisson, le caisson étant équipé d'un dispositif de bâchage/débâchage (2), qui comprend une bâche (20) attachée à l'une (14) des deux parois latérales, et une barre d'enroulement/déroulement (21) qui est attachée à la bâche, ladite barre d'enroulement/déroulement (21) étant apte à rouler sur le caisson dans un sens ou dans l'autre entre les deux parois latérales (13, 14) du caisson, entre une première position dans laquelle la bâche (20) est enroulée autour de la barre d'enroulement/déroulement (21), et une deuxième position dans laquelle la bâche (20) est déroulée et couvre l'ouverture supérieure du caisson, le dispositif de bâchage/débâchage (2) comportant un moyen d'entraînement (25) couplé mécaniquement à une extrémité de la barre d'enroulement/déroulement (21), et permettant de faire tourner la barre d'enroulement/déroulement sur elle-même dans un sens de rotation ou dans l'autre pour enrouler ou dérouler la bâche (20), **caractérisés en ce que** la barre d'enroulement/déroulement (21) comporte un organe d'entraînement (22) à chacune de ses deux extrémités (21a, 21b) non couvertes par la bâche (20), **en ce que** le dispositif de bâchage/débâchage (2) comprend deux rails d'entraînement (23, 24) qui s'étendent entre les deux parois latérales (13, 14) du caisson, **en ce que** les deux rails d'entraînement (23, 24) sont aptes à engrener respectivement avec les deux organes d'entraînement (22) de la barre d'enroulement/déroulement (21), de manière à permettre au cours du déplacement dans un sens ou dans l'autre de la barre d'enroulement/déroulement (21) entre la première position et la deuxième position, la transformation à chacune des deux extrémités (21a, 21b) de la barre d'enroulement/déroulement de la rotation de la barre d'enroulement/déroulement (21) en une combinaison d'un mouvement de rotation et d'un mouvement de translation de la barre d'enroulement/déroulement (21), et **en ce qu'**au moins un (23) des rails d'entraînement, positionné en partie arrière du caisson, est escamotable et peut être déplacé entre la position de bâchage/débâchage dans laquelle il s'étend entre les deux parois latérales (13, 14) du caisson (1), et une position escamotée dans laquelle il ne s'étend pas entre les deux parois latérales (13, 14) du caisson (1).

2. Caisson de chargement et dispositif de bâchage/débâchage selon la revendication 1, dans lesquels les deux rails d'entraînement (23, 24) et les deux organes d'entraînement (22) permettent la transformation de la rotation de la barre d'enroulement/déroulement (21) en une combinaison d'un mouvement de rotation et d'un mouvement de translation circulaire de la barre d'enroulement/déroulement (21).

3. Caisson de chargement et dispositif de bâchage/débâchage selon l'une quelconque des revendications 1 à 2, dans lesquels chaque organe d'entraînement (22) est une roue dentée, et chaque rail d'entraînement (23, 24) comprend une crémaillère apte à engrener avec la roue dentée (22) correspondante.

4. Caisson de chargement et dispositif de bâchage/débâchage selon l'une quelconque des revendications 1 à 2, dans lesquels chaque organe d'entraînement (22) est un pignon, et chaque rail d'entraînement (23, 24) comprend une chaîne fixe apte à engrener avec le pignon (22) correspondant.

5. Caisson de chargement et dispositif de bâchage/débâchage selon l'une quelconque des revendications précédentes, dans lesquels la porte arrière comporte un unique vantail monté pivotant autour d'un axe sensiblement vertical, et dans lesquels l'un (23) des rails d'entraînement est porté par ledit vantail de manière à permettre son escamotage.

6. Caisson de chargement et dispositif de bâchage/débâchage selon l'une quelconque des revendications 1 à 4, dans lesquels la porte arrière comporte deux vantaux qui sont chacun montés pivotant autour d'un axe sensiblement vertical et dans lesquels le rail d'entraînement (23) escamotable comporte deux portions (23a) de rail d'entraînement portées respectivement par les deux vantaux arrière (120, 121), de telle sorte qu'une fois la porte arrière à deux vantaux fermée, les deux portions (23a) de rail d'entraînement sont dans le prolongement l'une de l'autre et forment un rail d'entraînement (23), qui s'étend entre les deux parois latérales (13, 14) du caisson (1), et de telle sorte que l'ouverture de chaque vantail arrière (120, 121) permet l'escamotage de chaque portion (23a) de rail d'entraînement.

7. Caisson de chargement et dispositif de bâchage/débâchage selon l'une quelconque des revendications 1 à 4, dans lesquels le caisson (1) comporte une traverse arrière (123) sur laquelle est fixé le rail d'entrainement (23) escamotable, et qui est mobile de manière à permettre l'escamotage dudit rail d'entrainement (23).

8. Caisson de chargement et dispositif de bâchage/débâchage selon la revendication 7, dans lesquels la traverse arrière (123) est montée pivotante.

9. Caisson de chargement et dispositif de bâchage/débâchage selon l'une quelconque des revendications précédentes, dans lesquels le caisson (1) est équipé de moyens de levage (16) permettant de faire basculer vers le haut et vers l'arrière le caisson (1).

10. Caisson de chargement et dispositif de bâchage/débâchage selon l'une quelconque des revendications précédentes, dans lesquels le moyen d'entraînement de la barre d'enroulement/déroulement (21) comporte un moteur ou motoréducteur (25) embarqué dont le rotor est couplé à l'arbre d'enroulement/déroulement.

11. Caisson de chargement et dispositif de bâchage/débâchage selon la revendication 10, dans lesquels le dispositif de bâchage/débâchage (2) comporte des moyens de reprise de couple (3), qui ont pour fonction de bloquer en rotation le stator du moteur ou motoréducteur (25) par rapport au caisson.

12. Caisson de chargement et dispositif de bâchage/débâchage selon la revendication 11, dans lesquels les moyens de reprise de couple (3) sont conçus pour appliquer sur la barre d'enroulement/déroulement (21) une force permettant de maintenir constamment en prise les deux organes d'entraînement (22) avec les rails d'entrainement (23, 24) au cours du déplacement de la barre d'enroulement/déroulement (21).

13. Véhicule, notamment véhicule industriel roulant de type camion-porteur, remorque ou semi-remorque, embarquant un caisson de chargement (1) et un dispositif de bâchage/débâchage (2) selon l'une quelconque des revendications précédentes, ledit caisson de chargement (1) étant amovible ou non amovible.

14. Dispositif de bâchage/débâchage pour caisson de chargement (1) comportant une paroi avant (11), une paroi arrière (12) et deux parois latérales opposées (13, 14), qui délimitent une ouverture de chargement supérieure (15), la paroi arrière (12) du caisson (1) comportant ou formant une porte arrière permettant le déchargement par l'arrière du caisson, ledit dispositif de bâchage/débâchage (2) comprenant une bâche (20) destinée à être attachée à l'une (14) des deux parois latérales du caisson, une barre d'enroulement/déroulement (21) qui est attachée à la bâche, et un moyen d'entraînement (25) couplé mécaniquement à une extrémité de la barre d'enroulement/déroulement (21), et permettant de faire tourner la barre d'enroulement/déroulement sur elle-même dans un sens de rotation ou dans l'autre pour enrouler ou dérouler la bâche (20), **caractérisé en ce que** la barre d'enroulement/déroulement (21) comporte un organe d'entraînement (22) à chacune de ses deux extrémités (21a, 21b) non couvertes par la bâche (20), **en ce qu'**il comprend deux rails d'entraînement (23, 24) qui sont prévus pour s'étendre entre les deux parois du caisson (13, 14), **en ce que** les deux rails d'entraînement (23, 24) sont aptes à engrener respectivement avec les deux organes d'entraînement (22) de la barre d'enroulement/déroulement, de manière à permettre, au cours des opérations de déroulement et d'enroulement de la bâche (20), la transformation, à chacune des deux extrémités (21a, 21b) de la barre d'enroulement/déroulement, de la rotation de la barre d'enroulement/déroulement (21) en une combinaison d'un mouvement de rotation et d'un mouvement translation de la barre d'enroulement/déroulement (21), et **en ce qu'**au moins un (23) des rails d'entraînement, destiné à être positionné en partie arrière du caisson, est escamotable et peut être déplacé entre une position de bâchage/débâchage dans laquelle il s'étend entre les deux parois (13, 14) du caisson (1), et une position escamotée dans laquelle il ne s'étend pas entre les deux parois (13,14) du caisson (1).

15. Dispositif selon la revendication 14, dans lequel les deux rails d'entraînement (23, 24) et les deux organes d'entraînement (22) permettent la transformation de la rotation de la barre d'enroulement/déroulement (21) en une combinaison d'un mouvement de rotation et d'un mouvement de translation circulaire de la barre d'enroulement/déroulement (21).

16. Dispositif selon la revendication 14 ou 15, dans lequel chaque organe d'entraînement (22) est une roue dentée, et chaque rail d'entraînement (23, 24) comprend une crémaillère apte à engrener avec la roue dentée (22) correspondante, ou dans lequel chaque organe d'entraînement (22) est un pignon, et chaque rail d'entraînement (23, 24) comprend une chaîne fixe apte à engrener avec le pignon (22) correspondant.

17. Dispositif selon l'une quelconque des revendications 14 à 16, dans lequel le moyen d'entraînement de la barre d'enroulement/déroulement (21) comporte un moteur ou motoréducteur (25) embarqué dont le rotor est couplé à l'arbre d'enroulement/déroulement.

18. Dispositif selon la revendication 17, comportant des moyens de reprise de couple (3), qui ont pour fonction de bloquer en rotation le stator du moteur ou motoréducteur (25) par rapport au caisson.

19. Dispositif selon la revendication 18, dans lequel les moyens de reprise de couple (3) sont conçus pour appliquer sur la barre d'enroulement/déroulement (21) une force permettant de maintenir constamment en prise les deux organes d'entraînement (22) avec les rails d'entrainement (23, 24) au cours du déplacement de la barre d'enroulement/déroulement (21).

## Patentansprüche

1. Ladebehälter (1) vom Muldentyp, umfassend eine Vorderwand (11), eine Rückwand (12) und zwei gegenüberliegende Seitenwände (13, 14), die eine obere Öffnung (15) zum Beladen begrenzen, wobei die Rückwand (12) des Behälters (1) eine hintere Tür umfasst oder bildet, welche das Entladen des Behälters von hinten ermöglicht, wobei der Behälter mit einer Vorrichtung zum Abdecken / Aufdecken (2) ausgestattet ist, welche eine Plane (20), die an einer der beiden Seitenwände (14) befestigt ist, und eine Aufroll-/Abrollwelle (21) umfasst, die an der Plane befestigt ist, wobei die Aufroll-/Abrollwelle (21) dazu ausgelegt ist, zwischen den beiden Seitenwänden (13, 14) Behälters in die eine oder die andere Richtung zwischen einer ersten Position, in welcher die Plane (20) auf die Aufroll-/Abrollwelle (21) aufgerollt ist, und einer zweiten Position, in welcher die Plane (20) abgerollt ist und die obere Öffnung des Behälters bedeckt, zu rollen, wobei die Vorrichtung zum Abdecken / Aufdecken (2) an einem Ende der Aufroll-/Abrollwelle (21) mechanisch mit einem Antriebsmittel (25) verbunden ist, welches einen Drehantrieb der Aufroll-/Abrollwelle in einer oder einer anderen Drehrichtung um sich selbst ermöglicht, um Plane (20) aufzurollen oder abzurollen,
**dadurch gekennzeichnet, dass** die Aufroll-/Abrollwelle (21) an jedem ihrer beiden Enden (21a, 21b), die nicht durch die Plane (20) bedeckt sind, ein Antriebselement (22) umfasst, dass die Vorrichtung zum Abdecken / Aufdecken (2) zwei Antriebsschienen (23, 24) umfasst, die sich zwischen den beiden Seitenwänden (13, 14) des Behälters erstrecken, dass die beiden Antriebsschienen (23, 24) geeignet sind, jeweils mit den beiden Antriebselementen (22) der Aufroll-/Abrollwelle (21) in Eingriff zu stehen, um während der Bewegung in die eine oder andere Richtung der Aufroll-/Abrollwelle (21) zwischen der ersten Position und der zweiten Position in jedem der beiden Enden (21a, 21b) der Aufroll-/Abrollwelle die Umwandlung der Rotation der Aufroll-/Abrollwelle (21) in eine Kombination aus einer Drehbewegung und einer Translationsbewegung der Aufroll-/Abrollwelle (21) zu ermöglichen, und dass mindestens eine der Antriebsschienen (23), die im hinteren Teil des Behälters angeordnet ist, entfernbar ist und zwischen der Position zum Abdecken / Aufdecken, in welcher sie sich zwischen den beiden Seitenwänden (13, 14) des Behälters (1) erstreckt, und einer entfernten Position, in welcher sie sich nicht zwischen den beiden Seitenwänden (13, 14) des Behälters (1) erstreckt, bewegbar ist.

2. Ladebehälter und Vorrichtung zum Abdecken / Aufdecken nach Anspruch 1, wobei die beiden Antriebsschienen (23, 24) und die beiden Antriebselemente (22) die Umwandlung der Rotation der Aufroll-/Abrollwelle (21) in eine Kombination aus einer Rotationsbewegung und einer kreisförmigen Translationsbewegung der Aufroll-/Abrollwelle (21) ermöglichen.

3. Ladebehälter und Vorrichtung zum Abdecken / Aufdecken nach einem der Ansprüche 1 bis 2, wobei jedes Antriebselement (22) ein Zahnrad ist, und jede Führungsschiene (23, 24) eine Zahnleiste ist, die dazu ausgelegt ist, in das entsprechende Zahnrad (22) einzugreifen.

4. Ladebehälter und Vorrichtung zum Abdecken / Aufdecken nach einem der Ansprüche 1 bis 2, wobei jedes Antriebselement (22) ein Zahnrad ist, und jede Führungsschiene (23, 24) eine feste Kette ist, die dazu ausgelegt ist, in das entsprechende Zahnrad (22) einzugreifen.

5. Ladebehälter und Vorrichtung zum Abdecken / Aufdecken nach einem der vorhergehenden Ansprüche, wobei die Rückwand (12) des Behälters einen einzigen Türflügel umfasst, der um eine im Wesentlichen vertikale Achse schwenkbar montiert ist, und wobei eine der Antriebsschienen (23) von dem Türflügel getragen wird, um ihr Entfernen zu ermöglichen.

6. Ladebehälter und Vorrichtung zum Abdecken / Aufdecken nach einem der Ansprüche 1 bis 4, wobei die hintere Tür zwei Türflügel umfasst, die jeweils schwenkbar um eine im Wesentlichen vertikale Achse montiert sind, und wobei die entfernbare Antriebsschiene (23) zwei Abschnitte (23a) der Antriebsschiene umfasst, die jeweils von den beiden hinteren Flügeln (120, 121) getragen werden, so dass dann, wenn mit den zwei Türflügeln die hintere Tür geschlossen wird, die beiden Abschnitte (23a) zueinander fluchten und eine Antriebsschiene (23) bilden, die sich zwischen den beiden Seitenwänden (13, 14) des Behälters (1) erstreckt, und derart, dass das Öffnen jedes der hinteren Türflügel (120, 121) das Entfernen des jeweiligen Abschnitts (23a) der Antriebsschiene ermöglicht.

7. Ladebehälter und Vorrichtung zum Abdecken / Aufdecken nach einem der Ansprüche 1 bis 4, wobei der Behälter (1) einen hinteren Querträger (123) umfasst, an dem die entfernbare Führungsschiene (23) befestigt ist, und der beweglich ist, um das Entfernen der Antriebsschiene (23) zu ermöglichen.

8. Ladebehälter und Vorrichtung zum Abdecken / Aufdecken nach Anspruch 7, wobei der hintere Querträger (123) schwenkbar angebracht ist.

9. Ladebehälter und Vorrichtung zum Abdecken / Aufdecken nach einem der vorhergehenden Ansprüche, wobei der Behälter (1) mit Hebemitteln ausgestattet ist (16), die das Kippen des Behälters (1) nach oben und hinten ermöglichen.

10. Ladebehälter und Vorrichtung zum Abdecken / Aufdecken nach einem der vorhergehenden Ansprüche, wobei die Antriebseinrichtung der Aufroll-/Abrollwelle (21) einen Motor oder eingebetteten Getriebemotor (25) umfasst, dessen Rotor mit der Aufroll-/Abrollwelle verbunden ist.

11. Ladebehälter und Vorrichtung zum Abdecken / Aufdecken nach Anspruch 10, wobei die Vorrichtung zum Abdecken / Aufdecken (2) Momentaufnahmemittel (3) mit der Funktion umfasst, die Drehung des Stators des Motors oder Getriebemotors (25) relativ zum Behälter zu blockieren.

12. Ladebehälter und Vorrichtung zum Abdecken / Aufdecken nach Anspruch 11, wobei die Momentaufnahmemittel (3) dazu ausgelegt sind, auf die Aufroll-/Abrollwelle (21) eine Kraft für das Aufrechterhalten eines ständigen Eingriffs Antriebselemente (22) mit den Antriebsschienen (23, 24) während der Bewegung der Aufroll-/Abrollwelle (21) aufzubringen.

13. Fahrzeug, insbesondere rollendes Industriefahrzeug vom Typ Lastkraftwagen, mit Anhänger oder Sattelanhänger, der einen abnehmbaren oder nicht abnehmbaren Ladebehälter (1) und eine Vorrichtung zum Abdecken / Aufdecken (2) nach einem der vorhergehenden Ansprüche umfasst.

14. Vorrichtung zum Abdecken / Aufdecken für Ladebehälter (1) mit einer Vorderwand (11), einer Rückwand (12) und zwei gegenüberliegenden Seitenwänden (13, 14), die die eine obere Öffnung (15) zum Beladen begrenzen, wobei die Rückwand (12) des Behälters (1) eine hintere Tür umfasst oder bildet, welche das Entladen des Behälters von hinten ermöglicht, wobei die Vorrichtung zum Abdecken / Aufdecken (2) eine Plane (20), die dazu ausgelegt ist, an einer der beiden Seitenwände (14) des Behälters befestigt zu sein, eine Aufroll-/Abrollwelle (21), die an der Plane befestigt ist, und ein Antriebsmittel (25) umfasst, welches mechanisch mit einem Ende der Aufroll-/Abrollwelle (21) verbunden ist und einen Drehantrieb der Aufroll-/Abrollwelle in einer oder einer anderen Drehrichtung ermöglicht, um Plane (20) aufzurollen oder abzurollen,
**dadurch gekennzeichnet, dass** die Aufroll-/Abrollwelle (21) an jedem ihrer beiden Enden (21a, 21b), die nicht durch die Plane (20) bedeckt sind, ein Antriebselement (22) umfasst, und dass sie zwei Antriebsschienen (23, 24) umfasst, die dazu ausgelegt sind, sich zwischen den beiden Seitenwänden (13, 14) des Behälters zu erstrecken, und dass die beiden Antriebsschienen (23, 24) geeignet sind, jeweils mit den beiden Antriebselementen (22) der Aufroll-/Abrollwelle in Eingriff zu stehen, um zu ermöglichen, dass während der Bewegung der Aufroll-/Abrollwelle (21) zwischen der ersten Position und der zweiten Position in die eine oder andere Richtung in jedem der beiden Enden (21a, 21b) der Aufroll-/Abrollwelle die Umwandlung der Rotation der Aufroll-/Abrollwelle (21) eine Kombination aus einer Drehbewegung und einer Translationsbewegung der Aufroll-/Abrollwelle (21) zu ermöglichen, und dass mindestens eine der Antriebsschienen (23), die dazu ausgelegt ist, im hinteren Teil des Behälters angeordnet zu sein, entfernbar ist und zwischen der Position zum Abdecken / Aufdecken, in welcher sie sich zwischen den beiden Seitenwänden (13, 14) des Behälters (1) erstreckt, und einer entfernten Position, in welcher sie sich nicht zwischen den beiden Seitenwänden (13, 14) des Behälters (1) erstreckt, bewegbar ist.

15. Vorrichtung nach Anspruch 14, wobei die beiden Antriebsschienen (23, 24) und die beiden Antriebselemente (22) die Umwandlung der Rotation der Aufroll-/Abrollwelle (21) in eine Kombination aus einer Rotationsbewegung und einer kreisförmigen Translationsbewegung der Aufroll-/Abrollwelle (21) ermöglicht.

16. Vorrichtung nach Anspruch 14 oder 15, wobei jedes Antriebselement (22) ein Zahnrad ist und jede Führungsschiene (23, 24) eine Zahnleiste ist, die dazu ausgelegt ist, in das entsprechende Zahnrad (22) einzugreifen, oder wobei jedes Antriebselement (22) ein Zahnrad ist und jede Führungsschiene (23, 24) eine feste Kette ist, die dazu ausgelegt ist, in das entsprechende Zahnrad (22) einzugreifen.

17. Vorrichtung nach einem der Ansprüche 14 bis 16, wobei das Antriebsmittel der Aufroll-/Abrollwelle (21) einen Motor oder eingebetteten Getriebemotor (25) umfasst, dessen Rotor mit der Aufroll-/Abrollwelle verbunden ist.

18. Vorrichtung nach Anspruch 17, ferner umfassend Momentaufnahmemittel (3) mit der Funktion, die Drehung des Stators des Motors oder Getriebemotors (25) relativ zum Behälter zu blockieren.

19. Vorrichtung nach Anspruch 18, wobei die wobei die Momentaufnahmemittel (3) dazu ausgelegt sind, auf die Aufroll-/Abrollwelle (21) eine Kraft für das Aufrechterhalten eines ständigen Eingriffs Antriebselemente (22) mit den Antriebsschienen (23, 24) während der Bewegung der Aufroll-/Abrollwelle (21) aufzubringen.

## Claims

1. Loading box body (1), of the bin type, comprising a front wall (11), a rear wall (12) and two opposite lateral walls (13, 14) which delimit a top opening (15) for loading it, the rear wall (12) of the box body (1) comprising or forming a rear door allowing the box body to be unloaded from the rear, the box body being equipped with a tarping/detarping device (2) which comprises a tarpaulin (20) attached to one (14) of the two lateral walls, and a rolling/unrolling bar (21) which is attached to the tarpaulin, the said rolling/unrolling bar (21) being able to roll across the box body in one direction or the other between the two lateral walls (13, 14) of the box body between a first position in which the tarpaulin (20) is rolled around the rolling/unrolling bar (21) and a second position in which the tarpaulin (20) is unrolled and covers the top opening of the box body, the tarping/detarping device (2) comprising a drive means (25) mechanically coupled to one end of the rolling/unrolling bar (21) and allowing the rolling/unrolling bar to be made to rotate on itself in one direction of rotation or the other in order to roll up or unroll the tarpaulin (20), **characterized in that** the rolling/unrolling bar (21) comprises a drive member (22) at each of its two ends (21a, 21b) that are not covered by the tarpaulin (20), **in that** the tarping/detarping device (2) comprises two drive rails (23, 24) which extend between the two lateral walls (13, 14) of the box body, **in that** the two drive rails (23, 24) are able to engage respectively with the two drive members (22) of the rolling/unrolling bar (21) so as to allow, during movement of the rolling/unrolling bar (21) in one direction or the other between the first position and the second position, the rotation of the rolling/unrolling bar (21) at each of the two ends (21a, 21b) of the rolling/unrolling bar to be converted into a combination of a rotational movement and of a translational movement of the rolling/unrolling bar (21), and **in that** at least one (23) of the drive rails, positioned in the rear part of the box body, is retractable and can be moved between the tarping/detarping position in which it extends between the two lateral walls (13, 14) of the box body (1) and a retracted position in which it does not extend between the two lateral walls (13, 14) of the box body (1).

2. Loading box body and tarping/detarping device according to Claim 1, in which the two drive rails (23, 24) and the two drive members (22) allow the rotation of the rolling/unrolling bar (21) to be converted into a combination of a rotational movement and of a circular translational movement of the rolling/unrolling bar (21).

3. Loading box body and tarping/detarping device according to either one of Claims 1 and 2, in which each drive member (22) is a toothed wheel, and each drive rail (23, 24) comprises a rack able to engage with the corresponding toothed wheel (22).

4. Loading box body and tarping/detarping device according to either one of Claims 1 and 2, in which each drive member (22) is a sprocket and each drive rail (23, 24) comprises a fixed chain able to engage with the corresponding sprocket (22).

5. Loading box body and tarping/detarping device according to any one of the preceding claims, in which the rear door comprises a single leaf pivot mounted about a substantially vertical axis and in which one (23) of the drive rails is borne by the said leaf in such a way as to allow it to be retracted.

6. Loading box body and tarping/detarping device according to any one of Claims 1 to 4, in which the rear door comprises two leaves each pivot mounted about a substantially vertical axis and in which the retractable drive rail (23) comprises two drive rail portions (23a) borne respectively by the two rear leaves (120, 121) such that once the two-leaf rear door is closed, the two drive rail portions (23a) lie in the continuation of one another and form a drive rail (23) which extends between the two lateral walls (13, 14) of the box body (1) and such that opening each rear leaf (120, 121) allows each drive rail portion (23a) to retract.

7. Loading box body and tarping/detarping device according to any one of Claims 1 to 4, in which the box body (1) comprises a rear cross member (123) to which the retractable drive rail (23) is fixed and which is able to move in such a way as to allow the said drive rail (23) to retract.

8. Loading box body and tarping/detarping device according to Claim 7, in which the rear cross member (123) is pivot mounted.

9. Loading box body and tarping/detarping device according to any one of the preceding claims, in which the box body (1) is equipped with lifting means (16) allowing the box body (1) to be tilted upwards and backwards.

10. Loading box body and tarping/detarping device according to any one of the preceding claims, in which the drive means driving the rolling/unrolling bar (21) comprises a mounted motor or geared motor unit (25) the rotor of which is coupled to the rolling/unrolling shaft.

11. Loading box body and tarping/detarping device according to Claim 10, in which the tarping/detarping device (2) comprises torque reacting means (3) the purpose of which is to block the rotation of the stator of the motor or geared motor unit (25) with respect to the box body.

12. Loading box body and tarping/detarping device according to Claim 11, in which the torque reacting means (3) are designed to apply to the rolling/unrolling bar (21) a force that allows the two drive members (22) to be kept constantly in mesh with the drive rails (23, 24) during the movement of the rolling/unrolling bar (21).

13. Vehicle, notably rolling industrial vehicle of the transporter truck, trailer or semitrailer type, carrying a loading box body (1) and a tarping/detarping device (2) according to any one of the preceding claims, the said loading box body (1) being removable or non-removable.

14. Tarping/detarping device for a loading box body (1) comprising a front wall (11), a rear wall (12) and two opposite lateral walls (13, 14) which delimit a top loading opening (15), the rear wall (12) of the box body (1) comprising or forming a rear door allowing the box body to be unloaded from the rear, the said tarping/detarping device (2) comprising a tarpaulin (20) intended to be attached to one (14) of the two lateral walls of the box body, a rolling/unrolling bar (21) which is attached to the tarpaulin, and a drive means (25) mechanically coupled to one end of the rolling/unrolling bar (21) and allowing the rolling/unrolling bar to be made to rotate on itself in one direction of rotation or the other in order to roll up or unroll the tarpaulin (20), **characterized in that** the rolling/unrolling bar (21) comprises a drive member (22) at each of its two ends (21a, 21b) not covered by the tarpaulin (20), **in that** it comprises two drive rails (23, 24) which are designed to extend between the two walls of the box body (13, 14), **in that** the two drive rails (23, 24) are able respectively to engage with the two drive members (22) of the rolling/unrolling bar so as to allow, during operations of unrolling and rolling up the tarpaulin (20), the rotation of the rolling/unrolling bar (21) to be converted, at each of the two ends (21a, 21b) of the rolling/unrolling bar, into a combination of a rotational movement and of a translational movement of the rolling/unrolling bar (21), and **in that** at least one (23) of the drive rails, which is intended to be positioned in the rear part of the box body, is retractable and can be moved between a tarping/detarping position in which it extends between the two walls (13, 14) of the box body (1) and a retracted position in which it does not extend between the two walls (13, 14) of the box body (1).

15. Device according to Claim 14, in which the two drive rails (23, 24) and the two drive members (22) allow the rotation of the rolling/unrolling bar (21) to be converted into a combination of a rotational movement and of a circular translational movement of the rolling/unrolling bar (21).

16. Device according to Claim 14 or 15, in which each drive member (22) is a toothed wheel, and each drive rail (23, 24) comprises a rack able to engage with the corresponding toothed wheel (22) or in which each drive member (22) is a sprocket and each drive rail (23, 24) comprises a fixed chain able to engage with the corresponding sprocket (22).

17. Device according to any one of Claims 14 to 16, in which the drive means driving the rolling/unrolling bar (21) comprises a mounted motor or geared motor unit (25) the rotor of which is coupled to the rolling/unrolling shaft.

18. Device according to Claim 17, comprising torque reacting means (3) the purpose of which is to block the rotation of the stator of the motor or geared motor unit (25) with respect to the box body.

19. Device according to Claim 18, in which the torque reacting means (3) are designed to apply to the rolling/unrolling bar (21) a force that allows the two drive members (22) to be kept constantly in mesh with the drive rails (23, 24) during movement of the rolling/unrolling bar (21).
